(19) Europäisches Patentamt
European Patent Office
Office européen des brevets

(11) **EP 2 779 756 B1**

(12) **EUROPEAN PATENT SPECIFICATION**

(45) Date of publication and mention
of the grant of the patent:
**24.04.2019 Bulletin 2019/17**

(51) Int Cl.:
***H04W 48/20*** (2009.01)  ***H04W 16/08*** (2009.01)
***H04W 84/04*** (2009.01)

(21) Application number: **13305294.4**

(22) Date of filing: **15.03.2013**

(54) **Control of user equipment to base station association to optimise network capacity utilisation**

Steuerung der Zurordnung zwischen Benutzergeräten und Basisstationen zur Optimierung der Benutzung der Netzwerkkapazität

Contrôle de l'association entre équipements utilisateurs et stations de base afin d'optimiser l'utilisation de la capacité réseau

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.09.2014 Bulletin 2014/38**

(73) Proprietor: **Alcatel Lucent**
**91620 Nozay (FR)**

(72) Inventor: **Kucera, Stepan**
**Dublin, 15 (IE)**

(74) Representative: **Nokia EPO representatives**
**Nokia Technologies Oy**
**Karaportti 3**
**02610 Espoo (FI)**

(56) References cited:
• **DAVASLIOGLU K ET AL: "Interference-based cell selection in heterogenous networks", INFORMATION THEORY AND APPLICATIONS WORKSHOP (ITA), 2013, IEEE, 10 February 2013 (2013-02-10), pages 1-6, XP032417940, DOI: 10.1109/ITA.2013.6502931 ISBN: 978-1-4673-4648-1**

• **HANLY S V: "AN ALGORITHM FOR COMBINED CELL-SITE SELECTION AND POWER CONTROL TO MAXIMIZE CELLULAR SPREAD SPECTRUM CAPACITY", IEEE JOURNAL ON SELECTED AREAS IN COMMUNICATIONS, IEEE SERVICE CENTER, PISCATAWAY, US, vol. 13, no. 7, 1 September 1995 (1995-09-01), pages 1332-1340, XP000525658, ISSN: 0733-8716, DOI: 10.1109/49.414650**

• **NUAYMI L ET AL: "Association of uplink power control and base station assignment in cellular cdma systems", COMPUTERS AND COMMUNICATIONS, 2000. PROCEEDINGS. ISCC 2000. FIFTH IEEE SYMPOSIUM ON JULY 3-6, 2000, PISCATAWAY, NJ, USA,IEEE, 3 July 2000 (2000-07-03), pages 705-710, XP010505425, ISBN: 978-0-7695-0722-4**

• **HENDESSI F ET AL: "Improved uplink cell capacity in CDMA systems using a new dynamic distribution algorithm", 2004 IEEE 60TH VEHICULAR TECHNOLOGY CONFERENCE. VTC2004-FALL (IEEE CAT. NO.04CH37575) IEEE PISCATAWAY, NJ, USA, IEEE, vol. 1, 26 September 2004 (2004-09-26), pages 714-718, XP010788470, DOI: 10.1109/VETECF.2004.1400101 ISBN: 978-0-7803-8521-4**

EP 2 779 756 B1

**(Cont. next page)**

- **SUBRAMANIAM M ET AL: "Performance of a Distributed Full Inversion Power Control and Base Station Assignment Scheme in a Cellular CDMA Network with Hot-spots", WIRELESS PERSONAL COMMUNICATIONS, KLUWER ACADEMIC PUBLISHERS, DO, vol. 65, no. 3, 1 April 2011 (2011-04-01), pages 713-729, XP035079871, ISSN: 1572-834X, DOI: 10.1007/S11277-011-0281-Z**

## Description

### FIELD OF THE INVENTION

The present invention relates to a method of controlling behaviour of user equipment located within a wireless communication network comprising a plurality of base stations, a computer program product and network control node operable to perform that method.

### BACKGROUND

Wireless communications systems are known. In such systems mobile communication devices, or "network connectible devices", are operable to communicate with each other via a core network.

Network connectible devices, for example, mobile telephones, or wireless devices such as iPads or other similar tablets, roam through a wireless communication system. Base stations are typically provided which support geographical areas of radio coverage known as cells. A number of such base stations are provided and are distributed geographically in order to provide a wide area of radio coverage to network connectible devices.

When network connectible devices (for example, user equipment) are within an area of radio coverage provided by a base station, active communication links may be established between user equipment and the base station. Information and data sent from a base station to user equipment occur using radio links referred to as "down links" and information and data sent from user equipment to a base station occur using radio links referred to as "up links".

Traditional base stations provide coverage in relatively large geographical areas and large radio cells supported by such base stations are often referred to as macro cells. It is possible to provide a heterogeneous network (HetNet), where smaller sized cells are provided within macro cells. Provision of small cells can enhance network effectiveness and network capacity, primarily as a result of a shorter distance between a base station and a network connectible device leading to a shorter radio link length, and also due to provision of small cells allowing for effective re-use of available radio spectrum.

Such smaller sized cells are typically supported by base stations referred to Low Power Nodes (LPNs) or "Small cell base stations" and provide smaller regions of radio coverage known as micro cells, pico cells, femto cells or metro cells within a macro cell. It will be appreciated that small cells may be provided particularly where communication coverage provided by a macro cell is poor, or in locations in which a user may wish to use an alternative communications link provided locally by a small cell base station to communicate with the core network.

Although the deployment of small cell base stations can provide advantages, some undesirable operational consequences may occur.

Accordingly, it is desired to provide an improved technique for the operation of wireless communication networks, including networks in which small cell base stations may be deployed.

"Interference-Based Cell Selection in Heterogeneous Network" by Davaslioglu et al. ITA Workshop IEEE, 10 Feb 2013 pages 1-6, discloses an interference-based cell selection method that uses uplink interference plus noise as a factor in determining cell selection. It calculates the interference of a user if served by a serving cell and that if served by a candidate cell and determines from this and pilot signal strength which cell to select.

"An algorithm for Combined Cell-Site Selection and Power Control to Maximize Cellular Spread Spectrum capacity" by Hanly, IEEE Journal on Selected Areas in Communications, IEEE services center Piscataway US, Vol 13, no. 7, 1/9/95 pages 1332 - 1340, discloses a combined power control cell-site selection algorithm that switches transmitter power levels between cell sites to provide a user allocation that reduces interference. The algorithm allows each user to find the optimal base station and the required minimal transmitter power level in a decentralised way.

### SUMMARY

A first aspect provides a method of controlling behaviour of user equipment located within a wireless communication network comprising a plurality of base stations, each user equipment being operable to form an association with one of said plurality of base stations such that a transmission made by said user equipment is received by said associated base station, according to the subject-matter of appended claim 1.

The first aspect recognises that available radio spectrum for use in wireless networks may be limited and methods of operation for network components are chosen to allow coordinated dynamic access of multiple active transceivers to shared radio frequency communication channels. Typically networks may be operable to balance a number of users within a network between base stations. Simply balancing user numbers between base stations may have advantages and, on the face of it, may appear to ensure that users are all offered an equally effective service.

The first aspect recognises that downlink-centric and uplink-centric algorithms to optimise network operation may result in conflicting strategies. This stems from fundamental downlink/uplink differences in implementation. Downlink transmissions made by macro base stations are typically characterized by a constant transmit power and an unknown distribution of downlink SINRs across a network, and uplink transmissions made by user equipment use iterative power adjustments to maintain predetermined constant SINR constraints set by base stations providing radio coverage. More specifically, downlink-oriented coverage algorithms primarily prioritize a load-balancing approach in which cell coverage is maintained such that the number of active cell users remains more or less equal among network cells. In contrast, optimisation of communication based on techniques which maximise uplink capacity do not operate to simply balance users across base stations. The first aspect recognises that it is possible to control operation of a network by taking steps to improve uplink communication links within a network.

The first aspect recognises that reliability and quality of communication on radio connections established between nodes in a network is dependent upon many factors, including signal to interference and noise ratio (SINR) experienced at each receiver.

In relation to uplink transmissions made by user equipment to a base station, a base station may implement a target SINR to be achieved by user equipment operating within its region of radio coverage. If it is determined that a transmission made by user equipment to the base station is being received at the base station with poor SINR, the user equipment operates to takes steps to increase the power at which it makes such uplink transmissions. That is to say, user equipment is typically operable to slowly increase (or decrease) transmission power as it updates its output power with respect to co-channel interference and noise experienced at a receiver; in this case, a base station.

Although iterative power control in such a manner works well to deal with the free movement of users through a network, it may operate to cause global divergence by operating to try and allow a user to reach a SINR which is unobtainable, given available transmission power or ambient interference occurring within a network.

Aspects and embodiments described recognise that the distribution of user equipment within a network may be influential upon overall network operation and, in particular, aspects recognise that for user equipment distributed across a geographic region within a network there is often more than one base station with which it is possible to form an association. Since base stations and user equipment are located across a geographic region, user equipment may be more able to meet a SINR requested by one base station in comparison to another base station, once interference caused by other user equipment in a co-channel deployment is taken into account.

Aspects and embodiments recognise that it is possible to model an arrangement of user equipment and base station associations within a region of a wireless network. For a given deployment of users and base stations it is possible to instruct or control network operation such that user equipment establish associations with base station, those associations being selected to reduce a proportion of a theoretical maximum available capacity within that region of a wireless network, for the given deployment of users and base stations.

The first aspect offers a method of controlling operation of a network by optimising uplink communications made within the network.

Increasing the pilot transmission power at a base station may effectively increase the "coverage region" offered by that base station to user equipment and, by making such a change, user equipment may be operable to select that base station rather than an alternative adjacent base station which is also transmitting a pilot signal. Adjusting the operational parameter of at least one of the plurality of base stations may comprise instructing user equipment to adjust a bias to a received pilot signal strength from at least one of the plurality of base stations. Accordingly, although the actual coverage region is not increased, the effective coverage region of a base station is increased (if the bias is positive) and user equipment may be more likely to form an association with such a base station.

In one embodiment, the association comprises that the base station is a serving base station of the user equipment. Accordingly, transmissions made by said user equipment are received by the serving base station and routed through the network. Whilst transmissions made by user equipment may be "heard" at non-serving base stations, often such transmissions simply cause noise and interference to a base station with which user equipment is not associated.

In one embodiment, the performance parameter comprises one or more of: an indication of target signal to noise and interference ratio set by the base station associated with the user equipment; an indication of user equipment channel gain; a sum of channel gain ratios; or an indication of interference caused to the user equipment by other user equipment in the network. Accordingly, each base station within the network will typically set a target SINR with which transmissions made by user equipment ought to be received at the base station. Depending upon ambient conditions within a network, and the location of users and base stations within a network, user equipment may be better placed to meet a SINR target of a base station other than the one with which it has a current association. Analysis of the performance of user equipment within a network in two different associations may offer an indication of whether network utilisation may be improved.

In one embodiment, the first association comprises a current user equipment base station association. Accordingly, active user equipment in a network may be analysed based on their current location and associations with base stations. Accordingly, information may be obtained from such user equipment to offer a dynamic means of controlling a network. It is possible to take into account only active user equipment, or in some embodiments, user equipment which are dormant within regions of radio coverage supported by base stations forming the network. In one embodiment, the first association comprises a time averaged user equipment base station association. Accordingly, rather than use actual measurements and reports made by user equipment operating within a network, a "typical" distribution of user equipment within a network maybe considered and operational parameters of base stations adjusted in accordance with such a typical distribution. In some embodiments, dynamic real-time coverage optimization is implemented and the cooperating base stations report the channel gain and target SINR data concerning only those UEs currently active within the network. Alternative embodiments maybe such that it is desired to implement coverage optimization which reflects a long-term "on-average" trend, and in such alternative embodiments, cooperating base stations may be operable to report data from active UEs, together with data obtained in relation to "virtual" users. Such data may, for example, comprise data relating to previously active UEs, or data obtained from the (weighted) combining of data relating to previous users with that of current active users. In some embodiments, a total number of active and virtual users can be chosen to reflect a long-term traffic average in a current operation cycle of a network.

In one embodiment, the method comprises: comparing multiple possible user equipment and base station associations and adjusting an operational parameter of at least one of the plurality of base stations to control user equipment to make a base station association determined by the comparison to offer a lower utilisation of the network capacity than a current user equipment base station association. Accordingly, whilst in some embodiments, the method may operate to compare only a few options in relation to possible user equipment and base station associations, in one embodiment, all possible permutations of user equipment associations may be considered and adjustments made to offer a better network utilisation that one which is currently being offered. If several user equipment to base station association arrangements appear to offer an equivalent improved network utilisation, one may be chosen at random to implement. In one embodiment, the comparison may encompass all possible user equipment and base station associations.

In one embodiment, the method comprises adjusting an operational parameter of at least one of the plurality of base stations to control user equipment to make a base station association determined by the comparison to offer the lowest utilisation of network capacity. Accordingly, if a number of possible association configurations are compared, it may be possible to implement a method which chooses the best of those compared options, the best being defined as that arrangement which leaves the network most accepting to the addition of further user equipment, that is to say, that which uses the least network capacity. In some embodiments, a threshold or target network ultilisation and said method may operate to select associations which meet said target or threshold.

In one embodiment, the method comprises considering those user equipment in the network operating in regions of radio coverage overlap which occur between the plurality of base stations. Accordingly, the method may only be undertaken in relation to user equipment deemed to be operating in overlap regions, which are likely to be those which could benefit most from any association change. In one embodiment, the method comprises considering those user equipment in the network determined to be operating at a cell edge.

In one embodiment, adjusting the operational parameter comprises adjusting user equipment and base station association such that: $SINR_1 (N_1-1) = SINR_2 (N_2-1)$ where $SINR_1$ and $SINR_2$ are target Signal to Interference and Noise ratio (SINR) at a first and second of the plurality of base stations, and $N_1$ and $N_2$ represent a number of active user equipment in a region of radio coverage supported by the first and second base station of the plurality of base stations. Accordingly, rather than balance load equally between base stations, the target quality of received transmissions made by user equipment can be taken into account. In one embodiment, the number of user equipment in a macrocell is artificially increased by an offset constant $x$ when determining the macro cell load factor $SINR_{cell} (N_{cell}-1)$, that offset constant x reflecting the asymmetry of inter-cell interference coupling. In other words, load factors can be defined as $SINR_{cell} (N_{cell} + x_{cell\ type} - 1)$ for a cell-specific constant $x_{cell\ type}$. In one embodiment, the constant may be selected to be smaller than a maximum $SINR_{cell}$ across those SINR targets used by said plurality of base stations.

In one embodiment, the performance parameter comprises **L** and is defined as the modulus of the dominant eigenvalue of a network information matrix **F**, the element in the **i**-th row and **j**-th column of an **NxN** matrix **F** being defined by $sin\ r_i\ h_{BS(i),j} / h_{BS(i),i}$ if $i \neq j$, and **0** if **i=j**, where

| | |
|---|---|
| **i** | index for distinguishing users in a radio coverage region of the plurality of base stations; |
| **BS(i)** | serving base station of user **i**; |
| **N** | total number of users in the radio coverage region served by the plurality of base stations; |
| **sinr<sub>i</sub>** | target signal to noise and interference ratio (SINR) of user **i**; |
| **h<sub>BS(i),j</sub>** | channel gain between user **j** and the serving base station of user **i**; |
| **h<sub>BS(i),i</sub>** | channel gain between user **i** and its serving base station. |

Accordingly, a model of user equipment operation may take into account uplink transmissions and interference caused by other user equipment within a network, in order to offer a means of controlling overall network operation. In some embodiments, each base station is operable to set the target SINR to the same value $SINR_{cell}$ for all of its users. In such embodiments, the dedicated base station may be operable to compute **L** of **F** by computing the spectral radius of an equivalent matrix **G**. The usage of the **CxC** matrix **G** instead of the **NxN** matrix **F** is numerically significantly more efficient as C « N. It will be appreciated that any equivalent matrix to **F** or **G** may also be used successfully to compute an indication of **L**.

In one embodiment, the communication network comprises a macro base station supporting a macro region of radio coverage and at least small cell base station operable to support a region of small cell radio coverage within the macro region of radio coverage.

Aspects and embodiments described may be helpful when implemented in a heterogeneous network. Heterogeneous networks pose challenges in relation to the management of a network. Whilst the deployment of base stations to support macro cells is typically preceded by extensive network planning, small cell base stations are often located within a wireless network on an ad-hoc basis. Whilst providing small cell base stations with a substantially plug-and-play functionality provides for cost-effective deployment of small cells, an uncontrolled deployment of small cells can result in interference with a primary macro cell network. Small cell base stations are designed to automatically integrate themselves within an existing macro cellular network and adaptively define and redefine their coverage area in the geographical location at which they are placed.

Auto-configuration algorithms which operate to adapt a coverage region for a small cell typically operate in a manner which unilaterally optimizes operation of only that small cell within a macro cell deployment. Often, the usefulness of parameters being optimized by such auto-configuration algorithms is such that the coverage solution found can be highly dependent upon a networking environment and user distribution together with cell performance requirements.

The first aspect may allow for automatic generation of a coverage region to be supported by a small cell which can be applicable to offer dynamic coverage optimization within a heterogeneous wireless cellular network. Embodiments and aspects may operate to maximise, for example, overall network capacity and energy efficiency whilst respecting constraints on service achievability.

A second aspect provides a computer program product operable, when executed on a computer, to perform the method of the first aspect.

A third aspect provides a network control node configured to control behaviour of user equipment located within a wireless communication network comprising a plurality of base stations, each user equipment being operable to form an association with one of said plurality of base stations such that a transmission made by said user equipment is received by said associated base station, according to the subject-matter of appended independent claim 13.

In one embodiment, the association comprises that the base station is a serving base station of the user equipment.

In one embodiment, the performance parameter comprises one or more of: an indication of target signal to noise interference set by the base station associated with the user equipment; an indication of user equipment channel gain; or an indication of interference caused to the user equipment by other user equipment in the network.

In one embodiment, the first association comprises a current user equipment base station association.

In one embodiment, the first association comprises a time averaged user equipment base station association.

In one embodiment, the comparison logic is operable to compare all possible user equipment and base station associations and instruct the implementation logic to adjust an operational parameter of at least one of the plurality of base stations to control user equipment to make a base station association determined by the comparison to offer a lower utilisation of the network capacity than a current user equipment base station association.

In one embodiment, the implementation logic is operable to adjust an operational parameter of at least one of the plurality of base stations to control user equipment to make a base station association determined by the comparison to offer the lowest utilisation of network capacity.

In one embodiment, the comparison logic is operable to consider only those user equipment in the network operating in regions of radio coverage overlap which occur between the plurality of base stations.

In one embodiment, the implementation logic is operable to adjust the operational parameter by adjusting user equipment and base station associations such that: $SINR_1 (N_1-1) = SINR_2(N_2-1)$ where $SINR_1$ and $SINR_2$ are target Signal to Interference and Noise ratio (SINR) at a first and second of the plurality of base stations, and $N_1$ and $N_2$ represent a number of active user equipment in a region of radio coverage supported by the first and second base station of the plurality of base stations.

In one embodiment, the performance parameter comprises **L** and is calculated by the determination logic, **L** being defined as the modulus of the dominant eigenvalue of a network information matrix **F**, the element in the **i**-th row and **j**-th column of an **NxN** matrix **F** being defined by $sinr_i\, h_{BS(i),j} / h_{BS(i),i}$ if $i \neq j$, and **0** if **i=j**, where

| | |
|---|---|
| **i** | index for distinguishing users in a radio coverage region of the plurality of base stations; |
| **BS(i)** | serving base station of user **i**; |
| **N** | total number of users in the radio coverage region served by the plurality of base stations; |
| $sinr_i$ | target signal to noise and interference ratio (SINR) of user **i**; |
| $h_{BS(i),j}$ | channel gain between user **j** and the serving base station of user **i**; |
| $h_{BS(i),i}$ | channel gain between user **i** and its serving base station. |

In one embodiment, the implementation logic is operable to adjust the operational parameter of at least one of the plurality of base stations by adjusting pilot transmission power of at least one of the plurality of base stations.

In one embodiment, the implementation logic is operable to adjust the operational parameter of at least one of the plurality of base stations by instructing user equipment to apply a bias to a received pilot signal strength from at least one of the plurality of base stations.

In one embodiment, the communication network comprises a macro base station supporting a macro region of radio coverage and at least one low power node operable to support a region of small cell radio coverage within the macro region of radio coverage.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

> Figure 1 illustrates schematically an average spectral radius of a matrix F as a function of small cell base station power budget allocated to pilot signal;
> Figure 2 illustrates schematically computation of a matrix **F** in relation to user equipment to cell associations within a topology according to one embodiment; and
> Figure 3 illustrates schematically the main steps of a method in accordance with one embodiment.

DESCRIPTION OF THE EMBODIMENTS

Components of a wireless telecommunications network typically include network connectible devices, including user equipment which are operable to roam through the wireless telecommunications network. Base stations (for example, node Bs and eNode Bs) are provided which each support an area of radio coverage. A number of such base stations are typically provided and are distributed geographically in order to provide a wide area of coverage to network connectible devices such as user equipment.

When users are within an area of radio coverage served and supported by a base station, communications maybe established between the user equipment and the base station over associated radio links. Communications which are sent from a base station to users are typically referred to as occurring on downlink channels, and communications transmitted by user equipment to base stations on associated radio channels are referred to as uplink channels. Each base station typically supports a number of sectors or cells within a geographical area of service. Typically, a different antenna within a base station supports each associated sector. Each base station has multiple antennas. It will be appreciated that different network architectures may be implemented to provide a wireless telecommunications network, including, for example, UMTS systems, WiMAX systems and Long Term Evolution (LTE) systems. In general, across these architectures, the functionality provided by network nodes described above is provided by network nodes which are named differently but have substantially analogous functionality.

Wireless communications systems are known. In such systems mobile communication devices, or "network connectible devices", are operable to communicate with each other via a core network.

Available radio spectrum for use in wireless networks may be limited and methods of operation for network components are typically chosen to allow coordinated dynamic access of multiple active transceivers to shared radio frequency communication channels. Networks may be operable to balance a number of users within a network between base stations. Simply balancing user numbers between base stations may have advantages and, on the face of it, may appear to ensure that users are all offered an equally effective service.

Aspects described herein recognise that downlink-centric and uplink-centric algorithms to optimise network operation may result in conflicting strategies. This stems from fundamental downlink/uplink differences in implementation. Downlink transmissions made by macro base stations are typically characterized by a constant transmit power and an unknown distribution of downlink SINRs across a network, and uplink transmissions made by user equipment use iterative power adjustments to maintain predetermined constant SINR constraints set by base stations providing radio coverage. More specifically, downlink-oriented coverage algorithms primarily prioritize a load-balancing approach in which cell coverage is maintained such that the number of active cell users remains more or less equal among network cells. In contrast, optimisation of communication based on techniques which maximise uplink capacity do not operate to simply balance users across base stations. The first aspect recognises that it is possible to control operation of a network by taking steps to improve uplink communication links within a network.

Reliability and quality of communication on radio connections established between nodes in a network is dependent upon many factors, including signal to interference and noise ratio (SINR) experienced at each receiver within a network. In relation to uplink transmissions made by user equipment to a base station, a base station may implement a target SINR to be achieved by user equipment operating within its region of radio coverage. If it is determined that a transmission made by user equipment to the base station is being received at the base station with poor SINR, the user equipment operates to takes steps to increase the power at which it makes such uplink transmissions. That is to say, user equipment is typically operable to slowly increase (or decrease) transmission power as it updates its output power with respect to co-channel interference and noise experienced at a receiver; in this case, a base station.

Although iterative power control in such a manner works well to deal with the free movement of users through a network, it may operate to cause global divergence by operating to try and allow a user to reach a SINR which is unobtainable, given available transmission power or ambient interference occurring within a network.

The distribution of user equipment within a network may be influential upon overall network operation and, in particular, aspects recognise that for user equipment distributed across a geographic region within a network there is often more than one base station with which it is possible to form an association, or with which communication links over radio channels may be established. Since base stations and user equipment are located across a geographic region, user equipment may be more able to meet a SINR requested by one base station in comparison to another base station, once interference caused by other user equipment in a co-channel deployment is taken into account.

It is possible to model an arrangement of user equipment and base station associations within a region of a wireless network. For a given deployment of users and base stations it is possible to instruct or control network operation such that user equipment establish associations with base station, those associations being selected to reduce a proportion of a theoretical maximum available capacity within that region of a wireless network, for the given deployment of users and base stations.

Overview

Before discussing the embodiments in any more detail, first an overview will be provided. Methods and apparatus operable to perform methods in accordance with techniques described herein are based upon recognition that a network maybe modelled and that coverage of a network may be optimized in relation to a model of uplink data throughput performance.

Aspects operate such that they control coverage of individual network cells such that the value of a network-wide key performance indicator $L$ is dynamically minimised.

The performance indicator $L$ resulting from an analysis and model of uplink operation within a network can be defined as a "spectral radius" and that spectral radius is the modulus of the dominant Eigenvalue of a network information matrix $F$.

The $NxN$ matrix $F$ describing network operation can be defined such that an element in the $i$-th row and $j$-th column of the $NxN$ matrix $F$ is defined by $sinr_i \, h_{BS(i),j} / h_{BS(i),i}$ if $i \neq j$, and $0$ if $i=j$ where

| | |
|---|---|
| $i$ | index for distinguishing users in the cells of the cooperating base stations, |
| $BS(i)$ | serving BS of user $i$, |
| $N$ | total number of users in the cells served by the cooperating base stations, |
| $sinr_i$ | target SINR of user $i$, |
| $h_{BS(i),j}$ | channel gain between the user $j$ and the base station of user $i$, |
| $h_{BS(i),i}$ | channel gain between the user $i$ and its serving base station, |

Aspects and embodiments recognise that it is possible to collect data within a network which enables creation of a matrix $F$ associated with a set of cooperating base stations within a network. Computation may then be done to find a user cell association which minimises spectral radius $L$ of the matrix $F$ associated with a set of cooperating base stations. Once a user cell association which results in a minimum spectrum radius $L$ has been determined, cooperating base stations may be informed, particularly if the optimal user cell association requires adjustment of their existing coverage regions in order to create an appropriate user cell association. That adjustment of a coverage area provided by one or more cooperating base stations within a network may occur via control of a pilot signal transmission strength or by appropriate network implementation of a cell selection bias in relation to a relevant base station.

It has been found that minimising $L$ (the modulus of the dominant Eigenvalue) results in a maximisation in uplink network capacity, that uplink network capacity being defined as the number of users within a relevant portion of a network having guaranteed signal-to-interference-and-noise ratios. Minimising $L$ also acts to minimise transmit powers at user equipment required to achieve such target signal-to-interference-and-noise ratios. That is to say, by adjusting which user equipment is attached to which base station within a network it is possible to minimise interference and maximise the chance of meeting a target signal-to-interference-and-noise ratio.

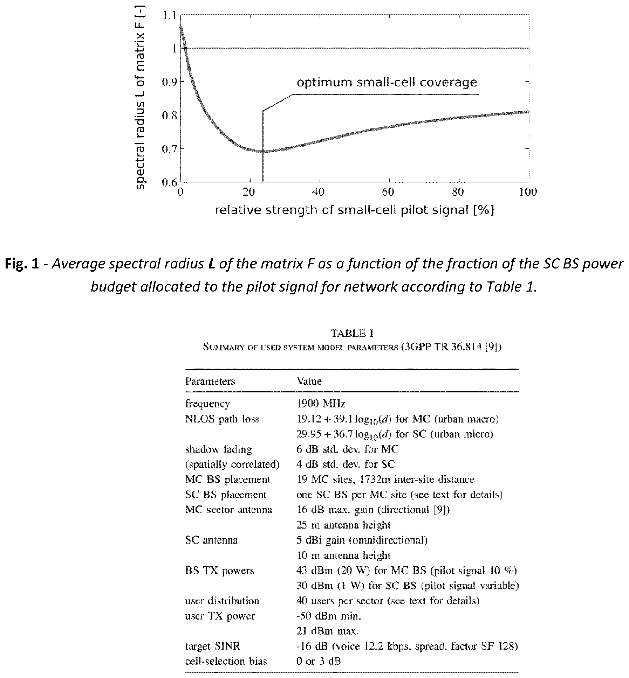

Figure 1 illustrates schematically an average spectral radius of a matrix $F$ as a function of small cell base station power budget allocated to pilot signal. Aspects recognise that minimising spectral radius of a network information matrix operates to maximise network capacity in relation to the uplink, that maximisation being defined as the number of users having a guaranteed signal-to-interference-and-noise ratio. Minimising $L$ also implicitly minimises powers required to achieve the target signal-to-interference-and-noise ratios, as illustrated in Figure 1.

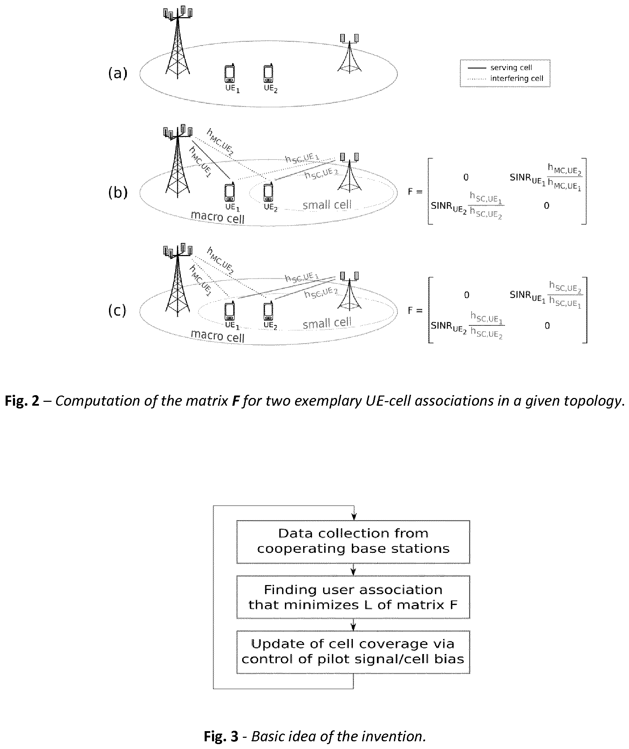

Figure 1 also shows the average spectral radius **L** of a matrix **F** as a function of a fraction of small cell base station power budget allocated to pilot signal for a network operating in accordance with Table 1 shown in Figure 3. It can be seen that in terms of a practical implementation, **L** relates to relative pilot signal strength being characterised by a distinct global minimum.

Modelling a particular deployment of network nodes using the matrix **F** may allow for control of the operation of nodes to improve network capacity and/or energy efficiency whilst respecting constraints on service achievability, and embodiments described in more detail below recognise that it is possible to optimize cellular coverage regions within a portion of a network on the basis of the matrix **F** which models uplink communications within a network.

**Applicability to Heterogeneous Networks**

Traditional base stations provide coverage across relatively large geographical areas and those cells are often referred to as macro cells. It is possible to provide a heterogeneous network where smaller sized cells are provided within macro cells. Such smaller sized cells are often referred to as metro cells, micro cells, pico cells, low power nodes or femto cells. One way to establish a small cell is to provide a small cell base station that provides coverage which has a relatively limited range within the coverage area of a macro cell. The transmission power of a small cell base station is typically low and, thus, each small cell is operable to provide a small coverage area in comparison to that of a macro cell.

Provision of small cell base stations within a network results in a need to consider methods of base station deployment. Typically, small cell base stations have been designed to automatically integrate themselves into an existing macro cellular network by adaptively defining or redefining their coverage area in a geographical location. Provision of small cell base stations, though potentially advantageous to a network in terms of throughput and radio spectrum re-use, may cause intolerable interference effects within a primary macro cell network.

The load balancing approach taken in relation to optimization of coverage based on optimizing downlink communication within a network is fundamentally inapplicable in a coverage optimization scheme which optimizes uplink. This is particularly the case when different cells target different performance levels. A primary application of small cell base stations is that of providing a localised boost to network capacity. That boost of network capacity often comes with a requirement of a higher target signal-to-interference-and-noise ratio on uplink communication compared to those targets used in relation to uplink communication for macro cell users.

Aspects and embodiments based on modelling a network using matrix **F** may be particularly helpful in heterogeneous network deployments in which there are multiple tiers of cell size. Given the typical asymmetry in macro cell and small cell size, small cell base stations generally experience significant uplink interference from macro cell users. Thus, the issues of target signal-to-interference-and-noise ratio achievability, power efficiency and cell breathing effects can determine whether a heterogeneous network comprising macro cells and small cells can actually be able to support required signal-to-interference-and-noise ratios of all active uplink connections at all times.

One coverage optimization scheme which can be derived from an analysis of a model using **F** is such that an optimum strategy for maximising uplink capacity in a heterogeneous system can be derived from maintaining cell coverage such that :

$$\mathrm{SINR_{SC}}\,(\mathrm{N_{SC}}\text{-}1) = \mathrm{SINR_{MC}}\,(\mathrm{N_{MC}}\text{-}1)$$

where $\mathbf{SINR_{SC}}$ and $\mathbf{SINR_{MC}}$ are the required target SINRs at the MacroCell and SmallCell BS, respectively, and $\mathbf{N_{SC}}$ and $\mathbf{N_{MC}}$ are the number of active MacroCell and SmallCell users, respectively. Clearly, $\mathbf{N_{SC}} \ll \mathbf{N_{MC}}$ if $\mathbf{SINR_{SC}} \gg \mathbf{SINR_{MC}}$, and vice versa. Hence, a load-balancing strategy consisting in maintaining $\mathbf{N_{SC}} = \mathbf{N_{MC}}$ is inapplicable to an uplink communication optimised control strategy in a heterogeneous network.

In other words, operation of a network to match such a constraint does not result in a load balanced strategy in which the number of small cell users is equal to the number of macro cell users. That is to say, applying a simple load balancing strategy in relation to optimization of uplink throughput does not result in an optimized uplink throughput within a network.

Example implementation

Figure 2 illustrates schematically computation of a matrix **F** in relation to two example "user equipment to cell" associations within a topology according to one embodiment. It is, of course, possible to try to compute a network information matrix **F** which covers an entire wireless telecommunications network. Such a matrix would be highly complex and involve extensive calculation in order to optimize uplink operation in relation to coverage. Instead, it is possible to sub-divide a network and calculate a set of network information matrices, each of which model operation of a sub-section of an entire communication network.

In relation to a heterogeneous network, for example, it is possible to create a network information matrix in relation to a cluster of base stations. Such a cluster may, for example, comprise one macro cell together with small cells deployed within such a macro cell, those cells cooperating to provide coverage to user equipment within a region of a larger communication network. According to such a distributed solution, a hosting macro cell may cooperate with small cells deployed within its coverage area in order to find a most suitable coverage configuration for all hosted small cells.

Solving a general network-wide coverage optimization problem in a distributed or "per macro cell" manner can reduce algorithmic overhead. The solution found by such a distributed method may not offer the very best performance across the entire network, but such a distributed means to calculate a solution may offer a final solution which is only a few per cent different from a whole network approach to estimate the key performance indicator **L**. When selecting a sub-region of a network across which to apply coverage optimization techniques in accordance with aspects and embodiments described, the set of cooperating base stations chosen should be such that they serve strongly interfering cells (for example, macro cells and associated small cells), and the interaction amongst non-cooperating base stations should be negligible; for example, the distant macro cells within a network.

Within a group of cooperating base stations, one base station or network node (for example, a macro cell base station, or RNC in a UMTS network) can be dedicated to performing the calculations necessary to calculate a coverage configuration which minimises spectral radius **L** of the network model matrix **F** derived on the basis of networking conditions.

The dedicated base station collects channel gain and target signal-to-interference-and-noise ratio data as required to determine matrix **F**. That information regarding channel gain and target signal-to-interference-and-noise ratio data may, for example, be collected periodically rather than continuously. Furthermore, the dedicated base station may be operable to use information collected either in relation to an absolute channel gain or normalised channel gain.

Since channel gains may be computed as a ratio of received and transmitted power, cooperating base stations may be operable to report to the dedicated base station the relevant information required for calculation of matrix **F**. In particular, base stations may be operable to report pilot signal powers and user equipment measurements of pilot signal received strengths in relation to individual cooperating base stations at that user equipment. If, for some reason, user equipment is unable to report on a pilot signal strength of a particular base station, the corresponding channel gain can be considered to be zero.

If real time coverage optimization is to be implemented, cooperating base stations may report channel gain and necessary signal-to-interference-and-noise ratio data in relation to currently active user equipment. If, however, it is desired to implement a coverage optimization scheme which reflects a long term or on average trend in relation to user equipment operating in a region of a network, cooperating base stations may be operable to report data obtained from active virtual and inactive user equipment; for example, data relating to previously active user equipment or data obtained from weighted combinations of previous or current user equipment operating within a coverage region. It will be appreciated, of course, that in some embodiments the total number of active and virtual user equipment may be set to reflect a long term traffic average within a region of a network.

In order to further minimise arithmetic and computational demand in relation to aspects and embodiments and implementations it is possible to base uplink optimization techniques on data being reported by cell edge user equipment. That is to say, it is possible to select basing calculations on edge users recognises that those edge users are likely to contribute most to inter-cell coupling, which effectively limits network capacity. Recognition that those user equipment are most significant to optimization of uplink throughput and most likely to be experiencing interference means that calculations in relation to determining which base station it is optimal for those user equipment to be attached to can be of great benefit. Furthermore, by basing calculations on those user equipment can offer some degree of robustness against user equipment mobility and traffic peaks.

Example of Figure 1

Turning now to Figure 2 which illustrates schematically computation of a network performance matrix **F** for an example network and user equipment deployment: Figure 2 illustrates a macro cell and a single small cell together with two user equipment, UE1 and UE2. Given reported user equipment data, a dedicated base station is operable to determine a matrix **F** in relation to various user equipment cell associations. Figure 2 shows, in Figure 2B and Figure 2C, two examples of possible user equipment to cell associations for a given user distribution, together with corresponding network information matrices. The dedicated base station may evaluate all permutations of user equipment to cell associations, but such calculations may be highly demanding of computational power and practically, only topologies characterised by different cell associations of cell edge user equipment are, in the illustration shown, considered. Having calculated a matrix for each user equipment cell association shown, those matrices are used to generate performance indicator **L** which is given by the modulus of the dominant Eigenvalue of each relevant matrix.

Having calculated the minimum spectral radius for each matrix, the dedicated base station is operable to select the optimum user equipment to cell associations, those being characterised by the smallest spectral radius associated with the matrices. It will be appreciated that methods for the computation of a matrix spectral radius are well known; for example, the power method.

In an alternative, rather than constructing a matrix in which each user equipment has an individually set target signal-to-interference-and-noise ratio, the dedicated base station may be presented with a network configuration such that each base station sets its target signal-to-interference-and-noise ratio to the same value for all user equipment operating in a cell which represents a more likely real life scenario. In this instance, a dedicated base station is operable to compute the minimum spectral radius **L** of a network information matrix by computing the spectral radius of an equivalent matrix **G**. Usage of a **CxC** matrix **G** instead of an **NxN** matrix **F** tends to be computationally more efficient since **C** is typically much smaller than **N**, **C** being the total number of cooperating base stations, rather than **N** which represents the total number of user equipment in a cell served by the **C** cooperating base stations.

Coverage Update

Once the dedicated base station has calculated the optimum association between user equipment and base stations to minimise spectral radius, it is operable, according to some embodiments, to transmit and/or otherwise announce to cooperating base stations the necessary adjustments of pilot signal strength or cell selection bias to implement the optimal associations. In one embodiment, for example, the cell selection bias is adjusted after there is no further room for adapting or increasing a cell pilot signal.

Cooperating base stations may be operable to use differences between a current and recommended pilot signal or bias as an input of a digital filter (for example, a running average filter), and applying the filter output to actual control of the pilot signal or bias setting. Such measures may allow for a reduction in fluctuations in relation to coverage control.

Recommendations from a dedicated base station may be further processed by user equipment or control nodes within a network to use average results of distributed real time measurements of the spectral radius **L**. Such measures may help take into account asynchronous traffic amongst network user equipment.

Figure 3 illustrates schematically the main steps of a method in accordance with one embodiment. In general, it will be appreciated that a network control node or dedicated base station operable to perform a method in accordance with aspects and embodiments described herein may perform the following steps:
Collection of data from a set of cooperating base stations; calculation of appropriate matrices and assessment of user equipment to base station associations which minimise the spectral radius possible within the arrangement of user equipment and cooperating base stations of a particular scenario; and taking steps to inform cooperating base stations of optimal user equipment associations such that it is possible to update cell coverage, be it via control of pilot signal transmission strength or implementation of a cell bias.

Implementation Options

In some embodiments it may be possible to implement numerically efficient implementations of a general method which do not require channel gain information. Whilst some implementations require that user equipment is operable to report measured information to a dedicated base station, in some embodiments, particularly in cases where the information reported to a dedicated base station is insufficient to construct either a matrix **F** (or **G**), the dedicated base station may be operable to assume that an optimal association between user equipment is characterised by balancing cell load factors $SINR_{CELL}$ ($N_{CELL-1}$) where $SINR_{CELL}$ denotes a target signal-to-interference-and-noise ratio of all user equipment in a given cell and $N_{CELL}$ denotes the number of active user equipment in that cell. According to one embodiment, the number of users in a macro cell operating within a heterogeneous network may be artificially increased by an offset constant X if determining the macro cell load factor $SINR_{CELL}$ ($N_{CELL-1}$), such an offset constant X reflecting the asymmetry of inter-cell interference coupling likely to be experienced within a heterogeneous network. In other words, load factors could be defined in such a scenario, such that $SINR_{CELL}$ ($N_{CELL+X+CELL\ TYPE-1}$) held for a cell specific constant $X_{CELL\ TYPE}$.

Selection of optimum associations may be subject to one or more further constraints in relation, for example, to the following:
Selection of the achievability of target uplink signal-to-interference-and-noise ratios associated with an optimal association may be taken into account. For example, it may be necessary to ensure that the spectral radius parameter **L** is less than or equal to 1 for a matrix or sub-matrix corresponding to currently active user equipment. A spectral radius greater than 1 indicates that the target uplink signal-to-interference-and-noise ratio may simply not be achievable by an arrangement of cooperating base stations.

It may be possible to take into account coverage of future user equipment by taking into account a minimum coverage to be operated to user equipment offered by a base station, those user equipment representing user equipment which might be expected to camp or request service at one or more of the cooperating base stations.

It is possible to take into account a balance between real time data and an average timescale set of data, and thus take into account a bounded difference between a matrix generated from data corresponding to active user equipment and a value generated from data corresponding to data generated to both active and inactive (for example, past or camping) user equipment, thereby potentially offering a more stable network which changes coverage area less frequently or within a bound.

It is possible to take into account a bounded difference between a spectral radius related to a current optimal association and optimal associations selected in the past, thereby limiting volatility of coverage in response to traffic variation.

It may be possible to take into account maximum user equipment transmit power and thus mitigate against cell breathing effects, using, for example, maxi-

mum UE power $\mathbf{p} = -(\mathbf{A-E})^{-1}\mathbf{B}$ such that it is limited where $\mathbf{E}$ is a diagonal identity matrix, and the $\mathbf{i}$-th element of the vector $\mathbf{B}$ is $(\mathbf{O_i} + \mathbf{SINR_i}\, \mathbf{n_i})\, /\, \mathbf{h_{ii}}$. The term $\mathbf{O_i}$ denotes a positive constant (e.g., an "open-loop" power offset) and $\mathbf{n_i}$ denotes the AWG noise.

Restrictions regarding minimum or maximum base station pilot transmit power may be implemented, thereby preventing the formation of coverage holes within a cooperating set of base stations.

There may be a requirement to cover all currently active user equipment by a specific base station, thereby reducing handover reductions within a set of cooperating base stations.

It may be possible to allow only a limited increase of spectral radius in response to an increase in selected elements of the matrix $\mathbf{F}$, thus offering a degree of robustness in relation to user equipment mobility within a set of cooperating base stations.

By explicitly considering a fundamental network performance indicator relating to uplink traffic within a network, aspects and embodiments may inherently offer performance advantages. Aspects may allow for a quality of service guarantee. By maintaining $\mathbf{L}$ such that it is less than or equal to 1 it can be ensured that target signal-to-interference-and-noise ratios of all network users are at all times achievable via simple closed loop power control methods. Aspects may allow for capacity within a network to be maximised by lowering the spectral radius $\mathbf{L}$ achieved within a set of cooperating base stations. More randomly located users with a given signal-to-interference-and-noise ratio may be admitted into a network comprising those cooperating base stations whilst maintaining the signal-to-interference-and-noise ratio for user equipment via iterative power control methods.

Similarly, aspects may recognise that the lower the spectral radius within a set of cooperating base stations the lower the power necessary to maintain target signal-to-interference-and-noise ratios via iterative power control messaging, thus allowing for a degree of passive cell breathing effect mitigation. It is further possible, by recognising user power limitations as part of constraints within techniques to minimise $\mathbf{L}$, to actively mitigate against cell breathing effects. Since $\mathbf{L}$ is usually characterised by an easily identifiable minimum within a set of cooperating base stations, aspects and embodiments offer a degree of simplicity and robustness.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method applied at a network control node of controlling behaviour of user equipment (UE1, UE2) located within a wireless communication network comprising a plurality of base stations, each user equipment being operable to form an association with one of said plurality of base stations such that a transmission made by said user equipment is received by said associated base station, said method comprising:

   determining, based on a performance parameter of a transmission made by each user equipment having a first base station association, an indication of a network capacity utilisation;
   comparing said indication of said network capacity utilisation with a further indication of said network capacity utilisation determined based on an alternative user equipment and base station association;
   determining by said comparing of said indication of said network capacity utilisation with said further indication of said network capacity utilisation the base station association offering a lower utilisation of said network capacity; and
   adjusting an operational parameter of at least one of said plurality of base stations to control user equipment to make that base station association determined by said comparing;
   wherein the performance parameter comprises the modulus of the dominant eigenvalue of a network information matrix calculated for each of the first and alternative user equipment and base station association; and
   adjusting said operational parameter of at least one of said plurality of base stations comprises at least one of: adjusting pilot transmission power of at least one of said plurality of base stations and instructing user equipment to adjust a bias to a received pilot signal strength from at least one of said plurality of base stations.

2. A method according to claim 1, wherein said association comprises that said base station is a serving base station of said user equipment.

3. A method according to claim 1 or claim 2, wherein said performance parameter comprises one or more of: an indication of target signal to noise and interference ratio used by said base station associated with said user equipment; an indication of user equipment channel gain; an indication of a sum of channel gain ratios; or an indication of interference caused to said user equipment by other user equipment in said network.

4. A method according to any preceding claim, wherein said first association comprises a current user equipment base station association.

5. A method according to any one of claims 1 to 3, wherein said first association comprises an indication of a predicted user equipment base station association.

6. A method according to any preceding claim, comprising: performing said comparing step for multiple possible user equipment and base station associations and adjusting an operational parameter of at least one of said plurality of base stations to control user equipment to make a base station association determined by said comparing to offer a lower utilisation of said network capacity than a current user equipment base station association.

7. A method according to any preceding claim, wherein said method comprises: adjusting an operational parameter of at least one of said plurality of base stations to control user equipment to make a base station association determined by said comparison to offer the lowest utilisation of said network capacity.

8. A method according to any preceding claim, comprising: considering those user equipment in said network determined to be operating in the region of a cell edge.

9. A method according to any preceding claim, wherein adjusting said operational parameter comprises adjusting user equipment and base station association such that: $SINR_1 (N_1 -1) = SINR_2(N_2-1)$ where $SINR_1$ and $SINR_2$ are target Signal to Interference and Noise ratio (SINR) at a first and second of said plurality of base stations, and $N_1$ and $N_2$ represent a number of active user equipment in a region of radio coverage supported by said first and second base station of said plurality of base stations.

10. A method according to any preceding claim, wherein the performance parameter comprises **L** defined as the modulus of the dominant eigenvalue of a network information matrix **F**, the element in the **i**-th row and **j**-th column of an **NxN** matrix **F** being defined by $sinr_i \, h_{BS(i),j} / h_{BS(i),i}$ if $i \neq j$, and **o** if **i=j**, where

    **i** index for distinguishing users in a radio coverage region of said plurality of base stations;
    **BS(i)** serving base station of user **i**;
    **N** total number of users in said radio coverage region served by said plurality of base stations;
    $sinr_i$ target signal to noise and interference ratio (SINR) of user **i**;
    $h_{BS(i),j}$ channel gain between user **j** and the serving base station of user **i**;
    $h_{BS(i),i}$ channel gain between user **i** and its serving base station.

11. A method according to any preceding claim, wherein said communication network comprises a macro base station supporting a macro region of radio coverage and at least one small cell base station operable to support a region of small cell radio coverage within said macro region of radio coverage.

12. A computer program product operable, when executed on a computer, to perform the method of any one of claims 1 to 11.

13. A network control node configured to control behaviour of user equipment (UE1, UE2) located within a wireless communication network comprising a plurality of base stations, each user equipment being operable to form an association with one of said plurality of base stations such that a transmission made by said user equipment is received by said associated base station, said network control node comprising:

determination logic operable to determine, based on a performance parameter of a transmission made by each user equipment having a first base station association, an indication of a network capacity utilisation;
comparison logic operable to compare said indication of said network capacity utilisation with a further indication of said network capacity utilisation determined based on an alternative user equipment and base station association; and
implementation logic operable to determine by said comparing of said indication of said network capacity utilisation with said further indication of said network capacity utilisation the base station association offering a lower utilisation of said network capacity and to adjust an operational parameter of at least one of said plurality of base stations to control user equipment to make that base station association determined by said comparing wherein the performance parameter comprises the modulus of the dominant eigenvalue of a network information matrix calculated for each of the first and alternative user equipment and base station association; and
said implementation logic is operable to adjust said operational parameter of at least one of said plurality of base stations by at least one of: adjusting pilot transmission power of at least one of said plurality of base stations and instructing user equipment to adjust a bias to a received pilot signal strength from at least one of said plurality of base stations.

**Patentansprüche**

1. Verfahren, das bei einem Netzwerksteuerknoten angewendet wird, zum Steuern des Verhaltens eines Benutzergeräts (UE1, UE2), das innerhalb eines drahtlosen Kommunikationsnetzwerks liegt, das mehrere Basisstationen aufweist, wobei jedes Benutzergerät bedient werden kann, um derart eine Zuordnung zu einer der mehreren Basisstationen zu bilden, dass eine Übertragung, die von dem Benutzergerät durchgeführt wird, von der zugeordneten Basisstation empfangen wird, wobei das Verfahren Folgendes umfasst:

Bestimmen basierend auf einem Leistungsparameter einer Übertragung, die von jedem Benutzergerät durchgeführt wird, das eine erste Basisstationszuordnung aufweist, einer Angabe einer Netzwerkkapazitätsauslastung;
Vergleichen der Angabe der Netzwerkkapazitätsauslastung mit einer weiteren Angabe der Netzwerkkapazitätsauslastung, die basierend auf einer alternativen Benutzergerät-und Basisstationszuordnung bestimmt wird;
Bestimmen durch das Vergleichen der Angabe der Netzwerkkapazitätsauslastung mit der weiteren Angabe der Netzwerkkapazitätsauslastung der Basisstationszuordnung, die eine geringere Auslastung der Netzwerkkapazität bietet; und
Einstellen eines Betriebsparameters von mindestens einer der mehreren Basisstationen zum Steuern des Benutzergeräts, um diese Basisstationszuordnung durch das Vergleichen bestimmen zu lassen;
wobei
der Leistungsparameter den Betrag des dominanten Eigenwerts einer Netzwerkinformationsmatrix aufweist, die für jede der ersten und alternativen Benutzergerät- und Basisstationszuordnung berechnet wird; und
das Einstellen des Betriebsparameters von mindestens einer der mehreren Basisstationen mindestens einen der folgenden Vorgänge umfasst: Einstellen der Pilotübertragungsleistung von mindestens einer der mehreren Basisstationen und Anweisen des Benutzergeräts, eine Vorspannung bezüglich einer empfangenen Pilotsignalstärke von mindestens einer der mehreren Basisstationen einzustellen.

2. Verfahren nach Anspruch 1, wobei die Zuordnung umfasst, dass die Basisstation eine dienende Basisstation des Benutzergeräts ist.

3. Verfahren nach Anspruch 1 oder Anspruch 2, wobei der Leistungsparameter eine oder mehrere der Folgenden aufweist: eine Angabe des Ziel-Signal-Rausch-Interferenz-Verhältnisses, das von der Basisstation verwendet wird, die dem Benutzergerät zugeordnet ist; eine Angabe der Benutzergerätkanalverstärkung; eine Angabe einer Summe von Kanalverstärkungsverhältnissen; oder eine Angabe der Interferenz, die bezüglich des Benutzergeräts durch ein anderes Benutzergerät in dem Netzwerk hervorgerufen wird.

4. Verfahren nach einem der vorherigen Ansprüche, wobei die erste Zuordnung eine aktuelle Benutzergerät-Basisstation-Zuordnung umfasst.

5. Verfahren nach einem der Ansprüche 1 bis 3, wobei die erste Zuordnung eine Angabe einer vorhergesagten Benutzergerät-Basisstation-Zuordnung aufweist.

6. Verfahren nach einem der vorherigen Ansprüche, umfassend: Durchführen des Vergleichsschritts für mehrere mögliche Benutzergerät- und Basisstationszuordnungen und Einstellen eines Betriebsparameters von mindestens einer der mehreren Basisstationen zum Steuern des Benutzergeräts, um eine Basisstationszuordnung durch das Vergleichen bestimmen zu lassen, um eine geringere Auslastung der Netzwerkkapazität als eine aktuelle Benutzergerät-Basisstation-Zuordnung zu bieten.

7. Verfahren nach einem der vorherigen Ansprüche, wobei das Verfahren Folgendes umfasst: Einstellen eines Betriebsparameters von mindestens einer der mehreren Basisstationen zum Steuern des Benutzergeräts, um eine Basisstationszuordnung durch das Vergleichen bestimmen zu lassen, um die geringste Auslastung der Netzwerkkapazität zu bieten.

8. Verfahren nach einem der vorherigen Ansprüche, umfassend: Berücksichtigen jener Benutzergeräte in dem Netzwerk, die als in dem Bereich eines Zellrands arbeitend bestimmt werden.

9. Verfahren nach einem der vorherigen Ansprüche, wobei das Einstellen des Betriebsparameters das derartige Einstellen der Benutzergerät- und Basisstationszuordnung umfasst, dass: $SINR_1 (N_1-1) = SINR_2(N_2-1)$, wobei $SINR_1$ und $SINR_2$ das Ziel-Signal-Interferenz-Rausch-Verhältnis (SINR) an einer ersten und zweiten der mehreren Basisstationen sind und $N_1$ und $N_2$ eine Anzahl an aktiven Benutzergeräten in einem Bereich der Funkabdeckung, der von der ersten und zweiten Basisstation der mehreren Basisstationen unterstützt wird, darstellen.

10. Verfahren nach einem der vorherigen Ansprüche, wobei der Leistungsparameter **L** aufweist, das als der Betrag des dominanten Eigenwerts einer Netzwerkinformationsmatrix **F** definiert ist, wobei das Element in der **i**-ten Zeile und **j**-ten Spalte einer NxN-Matrix **F** definiert ist durch $sinr_i h_{BS(i)j}/h_{BS(i),i}$, wenn $i \neq j$ ist, und **0**, wenn $i = j$ ist, wobei

**i** der Index zur Unterscheidung von Benutzern in einem Funkabdeckungsbereich der mehreren Basisstationen ist;
**BS(i)** die dienende Basisstation des Benutzers **i** ist;
**N** die Gesamtanzahl an Benutzern in dem Funkabdeckungsbereich, der von den mehreren Basisstationen bedient wird, ist;
$sinr_i$ das Ziel-Signal-Rausch-Interferenz-Verhältnis (SINR) des Benutzers **i** ist;
$h_{BS(i)j}$ die Kanalverstärkung zwischen dem Benutzer **j** und der dienenden Basisstation des Benutzers **i** ist;
$h_{BS(i),i}$ die Kanalverstärkung zwischen dem Benutzer **i** und seiner dienenden Basisstation ist.

11. Verfahren nach einem der vorherigen Ansprüche, wobei das Kommunikationsnetzwerk eine Makrobasisstation, die einen Makrobereich der Funkabdeckung unterstützt, und mindestens eine Kleinzellenbasisstation, die betrieben werden kann, um einen Bereich der Kleinzellenfunkabdeckung innerhalb des Makrobereichs der Funkabdeckung zu unterstützen, aufweist.

12. Computerprogrammprodukt, das, wenn es auf einem Computer ausgeführt wird, betrieben werden kann, um das Verfahren nach einem der Ansprüche 1 bis 11 durchzuführen.

13. Netzwerksteuerknoten, der zum Steuern des Verhaltens eines Benutzergeräts (UE1, UE2) konfiguriert ist, das innerhalb eines drahtlosen Kommunikationsnetzwerks liegt, das mehrere Basisstationen aufweist, wobei jedes Benutzergerät betrieben werden kann, um derart eine Zuordnung zu einer der mehreren Basisstationen zu bilden, dass eine Übertragung, die von dem Benutzergerät durchgeführt wird, von der zugeordneten Basisstation empfangen wird, wobei der Netzwerksteuerknoten Folgendes aufweist:

eine Bestimmungslogik, die betrieben werden kann, um basierend auf einem Leistungsparameter einer Übertragung, die von jedem Benutzergerät durchgeführt wird, das eine erste Basisstationszuordnung aufweist, eine Angabe einer Netzwerkkapazitätsauslastung zu bestimmen;
eine Vergleichslogik, die betrieben werden kann, um die Angabe der Netzwerkkapazitätsauslastung mit einer weiteren Angabe der Netzwerkkapazitätsauslastung, die basierend auf einer alternativen Benutzergerät- und Basisstationszuordnung bestimmt wird, zu vergleichen; und

eine Implementierungslogik, die betrieben werden kann, um durch das Vergleichen der Angabe der Netzwerkkapazitätsauslastung mit der weiteren Angabe der Netzwerkkapazitätsauslastung die Basisstationszuordnung zu bestimmen, die eine geringere Auslastung der Netzwerkkapazität bietet, und einen Betriebsparameter von mindestens einer der mehreren Basisstationen zum Steuern des Benutzergeräts einzustellen, um diese Basisstationszuordnung durch das Vergleichen bestimmen zu lassen, wobei

der Leistungsparameter den Betrag des dominanten Eigenwerts einer Netzwerkinformationsmatrix aufweist, die für jede der ersten und alternativen Benutzergerät- und Basisstationszuordnung berechnet wird; und

die Implementierungslogik betrieben werden kann, um den Betriebsparameter von mindestens einer der mehreren Basisstationen durch mindestens eine der folgenden Vorgänge einzustellen: Einstellen der Pilotübertragungsleistung von mindestens einer der mehreren Basisstationen und Anweisen des Benutzergeräts, eine Vorspannung bezüglich einer empfangenen Pilotsignalstärke von mindestens einer der mehreren Basisstationen einzustellen.

## Revendications

1. Procédé appliqué à un noeud de commande de réseau de commande d'un comportement d'un équipement utilisateur (UE1, UE2) situé à l'intérieur d'un réseau de communication sans fil comprenant une pluralité de stations de base, chaque équipement utilisateur permettant de former une association avec une station de base de ladite pluralité de stations de base de telle sorte qu'une transmission réalisée par ledit équipement utilisateur soit reçue par ladite station de base associée, ledit procédé comprenant :

   la détermination, en se basant sur un paramètre de performance d'une transmission réalisée par chaque équipement utilisateur ayant une première association de station de base, d'une indication d'une utilisation de capacité de réseau ;
   la comparaison de ladite indication de ladite utilisation de capacité de réseau avec une indication supplémentaire de ladite utilisation de capacité de réseau déterminée en se basant sur une association d'équipement utilisateur et de station de base alternative ;
   la détermination par ladite comparaison de ladite indication de ladite utilisation de capacité de réseau avec ladite indication supplémentaire de ladite utilisation de capacité de réseau, de l'association de station de base offrant une utilisation plus faible de ladite capacité de réseau ; et
   l'ajustement d'un paramètre opérationnel d'au moins une station de base de ladite pluralité de stations de base pour commander un équipement utilisateur pour réaliser cette association de station de base déterminée par ladite comparaison ;
   dans lequel
   le paramètre de performance comprend le module de la valeur propre dominante d'une matrice d'information de réseau calculé pour la première association d'équipement utilisateur et de station de base et pour l'association d'équipement utilisateur et de station de base alternative ; et
   l'ajustement dudit paramètre opérationnel d'au moins une station de base de ladite pluralité de stations de base comprend : l'ajustement d'une puissance de transmission pilote d'au moins une station de base de ladite pluralité de stations de base et/ou l'instruction donnée à un équipement utilisateur d'ajuster une polarisation à une intensité de signal pilote à partir d'au moins une station de base de ladite pluralité de stations de base.

2. Procédé selon la revendication 1, dans lequel ladite association comprend le fait que ladite station de base est une station de base de desserte dudit équipement utilisateur.

3. Procédé selon la revendication 1 ou la revendication 2, dans lequel ledit paramètre de performance comprend : une indication d'un rapport signal sur bruit et interférence cible utilisé par ladite station de base associée audit équipement utilisateur ; et/ou une indication d'un gain de canal d'équipement utilisateur ; et/ou une indication d'une somme de rapports de gain de canal ; et/ou une indication d'interférences provoquées audit équipement utilisateur par un autre équipement utilisateur dans ledit réseau.

4. Procédé selon l'une quelconque des revendications précédentes, dans lequel ladite première association comprend une association actuelle d'équipement d'utilisateur et de station de base.

5. Procédé selon l'une quelconque des revendications 1 à 3, dans lequel ladite première association comprend une indication d'une association d'équipement d'utilisateur et de station de base prédite.

6. Procédé selon l'une quelconque des revendications précédentes, comprenant : la réalisation de ladite étape de comparaison pour de multiples associations d'équipement utilisateur et de station de base possibles et l'ajustement d'un paramètre opérationnel d'au moins une station de base de ladite pluralité de stations de base pour commander un équipement utilisateur pour réaliser une association de station de base déterminée par ladite comparaison pour offrir une utilisation plus faible de ladite capacité de réseau qu'une association actuelle d'équipement d'utilisateur et de station de base.

7. Procédé selon l'une quelconque des revendications précédentes, dans lequel ledit procédé comprend : l'ajustement d'un paramètre opérationnel d'au moins une station de base de ladite pluralité de stations de base pour commander un équipement utilisateur pour réaliser une association de station de base déterminée par ladite comparaison pour offrir l'utilisation la plus faible de ladite capacité de réseau.

8. Procédé selon l'une quelconque des revendications précédentes, comprenant : la considération que cet équipement utilisateur dans ledit réseau est déterminé comme étant opérationnel dans la région d'un bord de cellule.

9. Procédé selon l'une quelconque des revendications précédentes, dans lequel l'ajustement dudit paramètre opérationnel comprend l'ajustement d'une association d'équipement utilisateur et de station de base de telle sorte que : $SINR_1 (N_1 - 1) = SINR_2 (N_2 - 1)$ où $SINR_1$ et $SINR_2$ constituent un rapport signal sur bruit et interférence (SINR) cible au niveau d'une première et d'une seconde station de base de ladite pluralité de stations de base et $N_1$ et $N_2$ représentent un certain nombre d'équipements utilisateurs actifs dans une région de couverture radio prise en charge par lesdites première et seconde stations de base de ladite pluralité de stations de base.

10. Procédé selon l'une quelconque des revendications précédentes, dans lequel le paramètre de performance comprend **L** défini comme étant le module de la valeur propre dominante d'une matrice d'information de réseau **F**, l'élément dans la **i**ème rangée et la **j**ème colonne d'une matrice **N x N F** qui est définie par $sin_i h_{BS(i),j} h_{BS(i),i}$ si $i \neq j$ et **0** si $i = j$, où

**i** un indice pour distinguer des utilisateurs dans une région de couverture radio de ladite pluralité de stations de base ;

    **BS(i)** une station de base de desserte de l'utilisateur **i** ;
    **N** le nombre total d'utilisateurs dans ladite région de couverture radio desservie par ladite pluralité de stations de base ;
    $sin_i$ le rapport signal sur bruit et interférence (SINR) cible de l'utilisateur **i** ;
$h_{BS(i),j}$ le gain de canal entre l'utilisateur **j** et la station de base de desserte de l'utilisateur **i** ;
$h_{BS(i),i}$ le gain de canal entre l'utilisateur **i** et sa station de base de desserte.

11. Procédé selon l'une quelconque des revendications précédentes, dans lequel ledit réseau de communication comprend une macrostation de base prenant en charge une macrorégion de couverture radio et au moins une station de base de petite cellule permettant de prendre en charge une région de couverture radio de petite cellule dans ladite macrorégion de couverture radio.

12. Produit-programme d'ordinateur permettant, lorsqu'il est exécuté sur un ordinateur, de réaliser le procédé selon l'une quelconque des revendications 1 à 11.

13. Noeud de commande de réseau configuré pour commander un comportement d'un équipement utilisateur (UE1, UE2) situé à l'intérieur d'un réseau de communication sans fil comprenant une pluralité de stations de base, chaque équipement utilisateur permettant de former une association avec une station de base de ladite pluralité de stations de base de telle sorte qu'une transmission réalisée par ledit équipement utilisateur soit reçue par ladite station de base associée, ledit noeud de commande de réseau comprenant :

    une logique de détermination permettant de déterminer, en se basant sur un paramètre de performance d'une transmission réalisée par chaque équipement utilisateur ayant une première association de station de base, une indications d'une utilisation de capacité de réseau ;
    une logique de comparaison permettant de comparer ladite indication de ladite utilisation de capacité de réseau avec une indication supplémentaire de ladite utilisation de capacité de réseau déterminée en se basant sur une association d'équipement utilisateur et de station de base alternative ; et
    une logique de mise en oeuvre permettant de déterminer, au moyen de ladite comparaison de ladite indication de ladite utilisation de capacité de réseau avec ladite indication supplémentaire de ladite utilisation de capacité de réseau, l'association de station de base offrant une utilisation plus faible de la capacité de réseau et d'ajuster un paramètre opérationnel d'au moins une station de base de ladite pluralité de stations de base pour commander un équipement utilisateur pour réaliser cette association de station de base déterminée par ladite comparaison, dans lequel

le paramètre de performance comprend le module de la valeur propre dominante d'une matrice d'information de réseau calculé pour la première association d'équipement utilisateur et de station de base et pour l'association d'équipement utilisateur et de station de base alternative ; et

ladite logique de mise en oeuvre permet d'ajuster ledit paramètre opérationnel d'au moins une station de base de ladite pluralité de stations de base : par l'ajustement d'une puissance de transmission pilote d'au moins une station de base de ladite pluralité de stations de base et/ou par l'instruction donnée à un équipement utilisateur d'ajuster une polarisation à une intensité de signal pilote à partir d'au moins une station de base de ladite pluralité de stations de base.

**Fig. 1** - *Average spectral radius **L** of the matrix F as a function of the fraction of the SC BS power budget allocated to the pilot signal for network according to Table 1.*

TABLE I

SUMMARY OF USED SYSTEM MODEL PARAMETERS (3GPP TR 36.814 [9])

| Parameters | Value |
|---|---|
| frequency | 1900 MHz |
| NLOS path loss | $19.12 + 39.1 \log_{10}(d)$ for MC (urban macro) |
| | $29.95 + 36.7 \log_{10}(d)$ for SC (urban micro) |
| shadow fading | 6 dB std. dev. for MC |
| (spatially correlated) | 4 dB std. dev. for SC |
| MC BS placement | 19 MC sites, 1732m inter-site distance |
| SC BS placement | one SC BS per MC site (see text for details) |
| MC sector antenna | 16 dB max. gain (directional [9]) |
| | 25 m antenna height |
| SC antenna | 5 dBi gain (omnidirectional) |
| | 10 m antenna height |
| BS TX powers | 43 dBm (20 W) for MC BS (pilot signal 10 %) |
| | 30 dBm (1 W) for SC BS (pilot signal variable) |
| user distribution | 40 users per sector (see text for details) |
| user TX power | -50 dBm min. |
| | 21 dBm max. |
| target SINR | -16 dB (voice 12.2 kbps, spread. factor SF 128) |
| cell-selection bias | 0 or 3 dB |

$$F = \begin{bmatrix} 0 & SINR_{UE_1} \dfrac{h_{MC,UE_2}}{h_{MC,UE_1}} \\ SINR_{UE_2} \dfrac{h_{SC,UE_1}}{h_{SC,UE_2}} & 0 \end{bmatrix}$$

$$F = \begin{bmatrix} 0 & SINR_{UE_1} \dfrac{h_{SC,UE_2}}{h_{SC,UE_1}} \\ SINR_{UE_2} \dfrac{h_{SC,UE_1}}{h_{SC,UE_2}} & 0 \end{bmatrix}$$

**Fig. 2** – *Computation of the matrix **F** for two exemplary UE-cell associations in a given topology.*

**Fig. 3** - *Basic idea of the invention.*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAVASLIOGLU et al.** Interference-Based Cell Selection in Heterogeneous Network. *ITA Workshop IEEE,* 10 February 2013, 1-6

- An algorithm for Combined Cell-Site Selection and Power Control to Maximize Cellular Spread Spectrum capacity. **HANLY.** IEEE Journal on Selected Areas in Communications. IEEE services center, vol. 13, 1332-1340